Europäisches Patentamt

European Patent Office

Office européen des brevets

(11) Veröffentlichungsnummer: **0 317 987**

**A2**

## (12) EUROPÄISCHE PATENTANMELDUNG

(21) Anmeldenummer: **88119508.5**

(22) Anmeldetag: **23.11.88**

(51) Int. Cl.⁴: **B01L 3/14 , G01N 33/49 , G01N 21/07**

(30) Priorität: **23.11.87 DE 8715505 U**

(43) Veröffentlichungstag der Anmeldung:
**31.05.89 Patentblatt 89/22**

(84) Benannte Vertragsstaaten:
**DE FR GB IT**

(71) Anmelder: **LMB MEDIZIN TECHNIK GMBH**
**Moeslstrasse 31**
**D-8059 Schwaig(DE)**

(72) Erfinder: **Melzner, Edgar**
**Adalbertstrasse 38**
**D-8000 München 40(DE)**

(74) Vertreter: **Liska, Horst, Dr. et al**
**Patentanwälte H. Weickmann, Dr. K. Fincke,**
**F.A. Weickmann, B. Huber, Dr. H. Liska, Dr. J.**
**Prechtel Möhlstrasse 22 Postfach 86 08 20**
**D-8000 München 86(DE)**

(54) **Reaktionsgefäss zur Untersuchung flüssiger Proben im Mikroliterbereich.**

(57) Das Reaktionsgefäß zur Untersuchung flüssiger Proben im Mikroliterbereich durch eine optische Auswertevorrichtung umfaßt einen zumindest teilweise aus transparentem Material bestehenden Gefäßkörper (1), der durch eine auf ihrer Oberseite durch eine Öffnung (9) zugängliche, auf ihrem Boden (7) eine Lesefläche (11) für die optische Auswertevorrichtung bildende Kammer (5) mit einem Volumen im Mikroliterbereich enthält. Der die Lesefläche (11) bildende Bereich des Bodens (7) ist mit hydrophilem Material beschichtet, während die Seitenwände (13) der Kammer (5) mit hydrophobem Material beschichtet sind. Längs des Übergangs von hydrophilen in hydrophobe Innenflächen ist ein Kapillarspalt (21) vorgesehen. Innenflächen, an welchen sich aufgrund der Bearbeitungsschritte, z.B. durch Zentrifugieren um eine Drehachse (3), Probentropfen sammeln können, haben Krümmungsradien in der Größenordnung der Gefäßabmessungen. An den Seitenwänden aufgrund von Adhäsionskräften haftende Tropfen verlaufen zu einem die Lesefläche (11) gleichmäßig bedeckenden Film.

Fig. 1

## Reaktionsgefäß zur Untersuchung flüssiger Proben im Mikroliterbereich

Die Erfindung betrifft ein Reaktionsgefäß zur Untersuchung flüssiger Proben im Mikroliterbereich durch eine optische Auswertevorrichtung, mit einem zumindest teilweise aus transparentem Material bestehenden Gefäßkörper, der eine auf ihrer Oberseite durch eine Öffnung zugängliche, auf ihrem Boden eine Lesefläche für die optische Auswertevorrichtung bildende Kammer mit einem Volumen im Mikroliterbereich enthält.

Bei der Verarbeitung flüssiger Proben im Mikroliterbereich, wie z.B. bei serologischen Reaktionen für die Blutgruppenbestimmung, haftet nach dem Durchmischen der an der Reaktion beteiligten Reagenzien, z.B. durch Schütteln oder Zentrifugieren, häufig die Flüssigkeit in Form eines Tropfens an den Wänden des Reaktionsgefäßes, insbesondere dessen Kanten und Ecken. Die zwischen der Wand und dem Flüssigkeitstropfen wirkenden Adhäsionskräfte als auch die durch die Oberflächenspannung in der Flüssigkeit gegebenen Kohäsionskräfte verhindern, daß die Flüssigkeit auf die am Boden des Reaktionsgefäßes für die optische Auswertung der Probe vorgesehene Lesefläche abfliessen und sich über die Lesefläche gleichmäßig verteilen kann.

Es ist Aufgabe der Erfindung, das eingangs erläuterte Reaktionsgefäß für die Untersuchung flüssiger Proben im Mikroliterbereich so zu verbessern, daß sich für die optische Auswertung der Probe ein gleichmäßiger Flüssigkeitsfilm im Bereich der Lesefläche des Reaktionsgefäßes bildet.

Diese Aufgabe wird erfindungsgemäß durch die im Kennzeichen des Anspruchs 1 angegebenen Merkmale gelöst. Zu diesem Zweck besteht zumindest der die Lesefläche bildende Bereich der Innenfläche des Gefäßbodens aus hydrophilem Material, während die an die hydrophilen Innenflächen des Bodens anschließenden Seitenwandinnenflächen aus hydrophobem Material bestehen. Längs des Übergangs von hydrophilen in hydrophobe Innenflächen ist ein Kapillarspalt vorgesehen. Die im Spalt entstehenden Kapillarkräfte wirken den Adhäsionskräften der Seitenwände entgegen und ziehen den an den Seitenwänden haftenden Flüssigkeitstropfen aufgrund der im Tropfen wirkenden Kohäsionskräfte in Richtung auf den Gefäßboden. Durch die Hydrophilisierung des Gefäßbodens wird dessen Benetzbarkeit verbessert, so daß der Flüssigkeitstropfen über der Lesefläche zu einem gleichmäßigen Flüssigkeitsfilm verlaufen kann. Die in Längsrichtung des Kapillerspalts wirkenden Kapillarkräfte sorgen hierbei dafür, daß sich der Flüssigkeitsfilm besser über die Lesefläche ausbreiten kann. Das Volumen des Kapillarspalts ist hierbei klein gegenüber dem Probenvolumen. Die Kennzeichnung von Flächen als hydrophil und hydrophob soll im vorliegenden Zusammenhang die Eigenschaften der Flächen relativ zueinander kennzeichnen.

In einer bevorzugten Ausgestaltung ist der Gefäßkörper Bestandteil eines Zentrifugeneinsatzes, bei welchem die Innenfläche des Bodens der Kammer zumindest im Bereich der Lesefläche eben und senkrecht zur Zentrifugendrehachse verläuft. Die auf der von der Drehachse radial entfernt gelegenen Seite an die Lesefläche angrenzende Seitenwand ist zur Drehachse hin mit einem Krümmungsradius konkav gekrümmt, der in der Größenordnung der Kammerabmessungen liegt. Durch die vorzugsweise sphärische Krümmung werden in dem Bereich, in welchem sich beim Zentrifugieren die Probe sammelt, Kanten und Ecken vermieden, wodurch die Haftung des Flüssigkeitstropfens an der Seitenwand vermindert wird.

Für manche Reaktionen, beispielsweise serologische Untersuchungen nach dem Coombs-Test, müssen Reagenzien, wie z.B. Waschflüssigkeiten, nicht nur zugeführt, sondern auch vor der optischen Auswertung wieder abgezogen werden. Um zu verhindern, daß die vorzugsweise durch Zentrifugieren abgetrennte Waschflüssigkeit oder dergleichen beim Abziehen aus dem Reaktionsgefäß mit der auszuwertenden Probe sich wieder vermischt bzw. daß über die in das Reaktionsgefäß eingeführte Abzugskanüle zugleich Probenmaterial mit abgesaugt wird, hat es sich als zweckmäßig erwiesen, unterhalb der für das Einführen der Abzugskanüle vorgesehenen Öffnung seitlich der Lesefläche eine Erhebung am Boden des Reaktionsgefäßes vorzusehen. Die Erhebung bildet zusammen mit angrenzenden Seitenflächen ebenfalls einen Kapillarspalt, durch den die über die optisch auszuwertende Probe geschichtete, abzuziehende Waschflüssigkeit von oben her stärker in den Einzugsbereich der Abzugskanüle gezogen wird, während die Erhebung die unter der Waschflüssigkeit liegende, auszuwertende Probe von der Abzugskanüle fern hält.

Die hydrophilen Bereiche des Bodens tragen zweckmäßiger weise eine Beschichtung aus polarem Material. Als dauerhafte Beschichtung eignet sich vorzugsweise im Hochvakuum aufgedampftes Siliziummonoxid, ggf. auch Siliziumdioxid. Um Wechselwirkungen der Flüssigkeit mit den üblicherweise aus Kunststoff bestehenden Gefäßwänden zu vermeiden, ohne jedoch die Transparenz der Wände zu beeinträchtigen, liegt die Schichtdicke im Angströmbereich, ist also lediglich 50 bis 100 Atomlagen dick.

Die hydrophoben Bereiche der Seitenwände und ggf. der oberen bzw. der Dachwand der Kammer sind mit einem unpolaren Material beschichtet, wie z.B. Paraffin oder paraffinartigen Strukturen. Geeignet sind insbesondere Polyolefine wie z.B. Polyisobutylen aufgrund seiner Transparenz.

Im folgenden werden Ausführungsbeispiele der Erfindung anhand einer Zeichnung näher erläutert. Es zeigt:

Figur 1 einen Radialschnitt durch ein Reaktionsgefäß als Bestandteil eines Zentrifugeneinsatzes;

Figur 2 einen Axialschnitt durch das Reaktionsgefäß, gesehen entlang einer Linie II-II in Figur 1;

Figur 3 einen Radialschnitt durch eine Variante eines Reaktionsgefäßes als Bestandteil eines Zentrifugeneinsatzes;

Figur 4 einen Axialschnitt durch das Reaktionsgefäß, gesehen entlang einer Linie IV-IV in Figur 3.

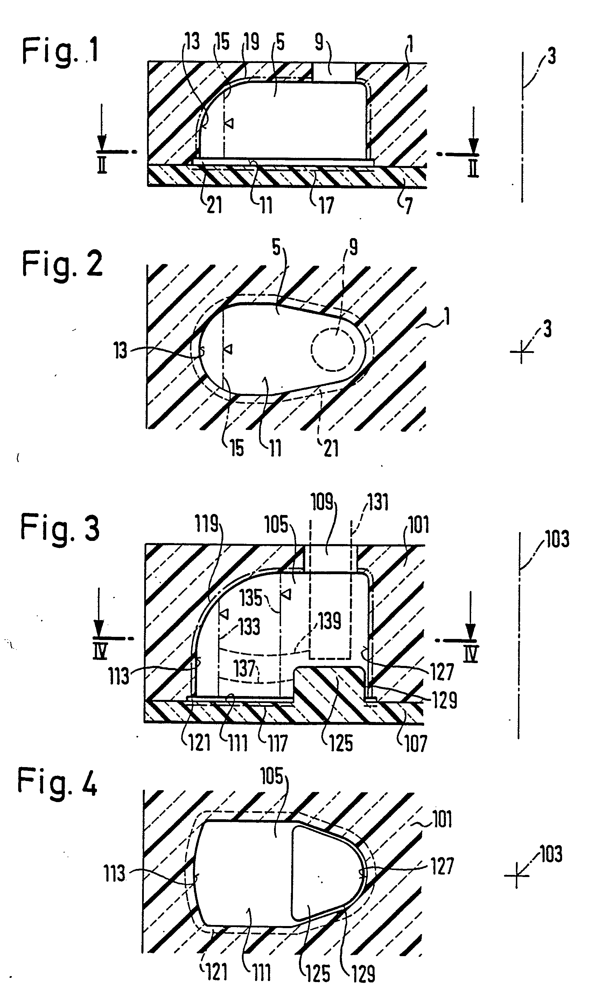

Die Figuren 1 und 2 zeigen ein Reaktionsgefäß, dessen Gefäßkörper 1 Bestandteil eines um eine Drehachse 3 rotierenden Zentrifugeneinsatzes ist. Der aus transparentem Kunststoffmaterial bestehende Gefäßkörper 1 enthält eine Kammer 5, die nach unten hin durch einen Boden 7 aus transparentem Material verschlossen und von oben her durch eine Öffnung 9 zugänglich ist.

Das Reaktionsgefäß eignet sich zur Untersuchung flüssiger Proben im Mikroliterbereich, beispielsweise zur Untersuchung serologischer Reaktionen, insbesondere für die Blutgruppenbestimmung. Bei Reaktionen dieser Art kommt es nach dem Durchmischen der an der Reaktion beteiligten Reagenzien durch Zentrifugieren zu einer Agglutinationsreaktion, die sich durch optische Auswertevorrichtungen nicht näher dargestellter Art auswerten lassen. Die achsnormal zur Drehachse 3 verlaufende, ebene Innenseite des Bodens 7 bildet eine Lesefläche 11 für das beispielsweise im Durchleuchtungsverfahren arbeitende, optische Auswertegerät.

Proben im Mikroliterbereich haften aufgrund der Adhäsionskräfte des Probenkörpers 1 und der Kohäsionskräfte der Probenflüssigkeit nach dem Zentrifugieren als Flüssigkeitstropfen an der zur Drehachse 3 entfernt gelegenen Seitenwandinnenfläche 13 der Kammer 5, wie dies durch eine Pegellinie 15 angedeutet ist. Für die optische Auswertung der Proben wird jedoch eine möglichst gleichmäßiger Flüssigkeitsfilm auf der Lesefläche 11 des Bodens 7 angestrebt.

Um die Ausbildung des Flüssigkeitsfilms auf der Lesefläche 11 zu erreichen, ist die Innenfläche des Bodens 7 mit einer Schicht 17 aus hydrophilem Material beschichtet, während die Seitenwandinnenflächen der Kammer 5 im übrigen mit einer Schicht 19 aus hydrophobem Material beschichtet sind. Entlang des Übergangs der Innenfläche des Bodens 7 in die Seitenwandinnenflächen erstreckt sich ein Kapillarspalt 21. Der Kapillarspalt 21, der, bezogen auf das von der Kammer 5 aufzunehmende Probenvolumen ein kleines Volumen hat, zieht an den Seitenwänden, insbesondere der Seitenwand 13, haftende Flüssigkeitstropfen aufgrund seiner Kapillarwirkung zum Boden 7 hin und längs des Kapillarspalts 21 auf die Drehachse 3 zu. Aufgrund der hydrophilen Eigenschaften des Bodens 7 verläuft die Flüssigkeit zu einem gleichmäßigen Film.

Die der Drehachse 3 entfernt gelegene Seitenwand 13 ist sphärisch konkav zur Drehachse hin gekrümmt und zwar mit einem Krümmungsradius, der in der Größenordnung der Abmessungen der Kammer 5 liegt. Auf diese Weise werden in dem zu Tropfenbildung neigenden Bereich der Kammer 5 Ecken und Kanten, d.h. Bereiche mit erhöhten Adhäsionskräften, vermieden, was das Ablaufen der Tropfen von der Seitenwand erleichtert.

Die hydrophile Beschichtung 17 des Bodens 7 besteht aus einem polaren, d.h. die Adhäsionskräfte erhöhenden Material. Als geeignet, weil mechanisch dauerhaft, haben sich im Hochvakuum aufgedampfte Schichten aus Siliziummonoxid oder ggf. Siliziumdioxid erwiesen. Die aufgedampften Schichten sind, um die optischen Eigenschaften des Reaktiongefäßes nicht zu verschlechtern und um Wechselwirkungen mit dem Kunststoffmaterial des Bodens 7 zu vermeiden, sehr dünn. Die Dicke liegt im Angströmbereich und ist zweckmäßigerweise nur 5 bis 10 Atomlagen dick.

Die hydrophobe Beschichtung 19 der Seitenwände einschließlich der die Kammer 5 nach oben hin abschließenden Dachflächen besteht aus einem unpolaren Material. Geeignet sind Paraffin oder paraffinartige Strukturen oder Polyolefine, wie z.B. Polyisobutylen, welches aufgrund seiner transparenten optischen Eigenschaften von Vorteil ist.

Die Kammer 5 hat vorzugsweise ein Volumen von weniger als 100 Mikroliter; ein geeigneter Volumenwert liegt bei etwa 30 Mikroliter für ein Reagenzvolumen von etwa 15 Mikroliter.

Die Figuren 3 und 4 zeigen eine Variante eines Reaktionsgefäßes für die Untersuchung flüssiger Proben im Mikroliterbereich, welche im Zuge der Verarbeitungsschritte auch das Abziehen abzentrifugierter Substanzen vor der optischen Auswertung der Proben erlaubt. Gleich wirkende Komponenten sind in den Figuren 3 und 4 mit den Bezugszahlen der Figuren 1 und 2, vermehrt um die Zahl 100, bezeichnet. Zur Erläuterung dieser Komponenten wird auf die Beschreibung der Figuren 1 und 2 Bezug genommen.

Im Unterschied zum vorstehend erläuterten Reaktionsgefäß ist der die Kammer 105 in dem Gefäßkörper 101 nach unten abschließende Boden 107 seitlich seiner Lesefläche 111 mit einer unter der Öffnung 109 gelegenen Erhebung 125 versehen. Die Erhebung 125 bildet mit der Drehachse 103 benachbart gelegenen Seitenwandinnenflächen 127 des Gefäßkörpers 101 einen weiteren Kapillarspalt 129 zusätzlich zu dem Kapillarspalt 121 an dem Übergang der hydrophilen Beschichtung 117 des Boden 107 zur hydrophoben Beschichtung 119 der Seitenwandinnenflächen. Der Kapillarspalt 129 erstreckt sich im wesentlichen über die gesamte Höhe der Erhebung 125 und beginnt an der Lesefläche 111, die sich zwischen der Erhebung 125 und der von der Drehachse 103 entfernt gelegenen Seitenwandinnenfläche 113 erstreckt.

Das Reaktionsgefäß der Figuren 3 und 4 eignet sich insbesondere für serologische Reaktionen mit einem Waschschritt, wie z.B. dem Coombs-Text, bei welchem vor der optischen Auswertung die Waschflüssigkeit, z.B. eine Kochsalzlösung, mittels einer Kanüle 131 abgesaugt werden muß.

Figur 3 zeigt, durch eine Pegellinie 133 angedeutet, die optisch auszuwertende Probe während des Zentrifugiervorgangs. Die entsprechende Pegellinie der darüber geschichteten Waschflüssigkeit ist bei 135 dargestellt. Für die optische Auswertung kommt es nicht nur darauf an, daß die auszuwertende Probe die Lesefläche 111 mit einem möglichst gleichförmigen Film bedeckt, sondern daß beim Absaugen der über die Probe geschichteten Wachflüssigkeit die Probe nicht mit abgesaugt und auch nicht mit Wachflüssigkeit erneut vermischt wird. Die Erhöhung 125 begrenzt die Lesefläche 111 und sorgt dafür, daß die entsprechend dem Ausführungsbeispiel der Figuren 1 und 2 sich über die Lesefläche 111 verteilende Probe aus dem Ansaugbereich der Kanüle 131 herausgehalten wird. Andererseits sorgt der die Erhebung 125 auf der leseflächenfernen Seite umschließende Kapillarspalt 129 dafür, daß sich auch die Wachflüssigkeit gleichmäßig über den Boden der Kammer verteilt und oberhalb der Erhöhung 125 abgesaugt werden kann. In Figur 3 ist bei 137 der Pegel des sich auf der Lesefläche 111 bildenden Probenfilms angedeutet, während der Waschflüssigkeitspegel bei 139 dargestellt ist.

## Ansprüche

1. Reaktionsgefäß zur Untersuchung flüssiger Proben im Mikroliterbereich durch eine optische Auswertevorrichtung, mit einem zumindest teilweise aus transparentem Material bestehenden Gefäßkörper (1; 101), der eine auf ihrer Oberseite durch eine Öffnung (9; 109) zugängliche, auf ihrem Boden (7; 107) eine Lesefläche (11; 111) für die optische Auswertevorrichtung bildende Kammer (5; 105) mit einem Volumen im Mikroliterbereich enthält, dadurch **gekennzeichnet,** daß zumindest der die Lesefläche (11; 111) bildende Bereich der Innenfläche des Bodens (7; 107) aus einem hydrophilen Material besteht, daß an die hydrophile Innenfläche des Bodens (7; 107) Seitenwände der Kammer (5; 105) anschließen, deren Innenflächen aus einem hydrophoben Material be stehen und daß längs des Übergangs von hydrophilen in hydrophobe Innenflächen ein Kapillarspalt (21; 121) verläuft.

2. Reaktionsgefäß nach Anspruch 1, dadurch gekennzeichnet, daß der Gefäßkörper (1; 101) Bestandteil eines Zentrifugeneinsatzes ist, daß die Innenfläche des Bodens (7; 107) zumindest im Bereich der Lesefläche (11; 111) eben und senkrecht zur Zentrifugendrehachse (3) verläuft, daß die Lesefläche (11; 111) an die Innenfläche der zur Drehachse (3; 103) radial entfernt gelegenen Seitenwand (13; 113) angrenzt und daß die Innenfläche dieser Seitenwand (13; 113) zu der der Drehachse (3; 103) radial benachbart gelegenen Seitenwandinnenfläche der Kammer (5; 105) hin mit einem Krümmungsradius konkav gekrümmt ist, der in der Größenordnung der Kammerabmessungen liegt.

3. Reaktionsgefäß nach Anspruch 2, dadurch gekennzeichnet, daß die der Drehachse (3; 103) entfernt gelegene Seitenwandinnenfläche sphärisch gekrümmt ist.

4. Reaktionsgefäß nach Anspruch 2 oder 3, dadurch gekennzeichnet, daß die Öffnung (109) gegen die Lesefläche (111) zur Drehachse (103) hin versetzt ist und daß der Boden (107) unterhalb der Öffnung (109) mit einer über die Lesefläche (111) nach oben vorstehenden Erhebung (125) versehen ist, die zusammen mit den Seitenwandinnenflächen einen Kapillarspalt (129) bildet.

5. Reaktionsgefäß nach Anspruch 4, dadurch gekennzeichnet, daß sich der durch die Erhebung (125) begrenzte Kapillarspalt (129) im wesentlichen über die gesamte Höhe der Erhebung (125) erstreckt.

6. Reaktionsgefäß nach einem der Ansprüche 1 bis 5, dadurch gekennzeichnet, daß die hydrophilen Innenflächen des Bodens (7; 107) mit einem polaren Material beschichtet sind.

7. Reaktionsgefäß nach einem der Ansprüche 1 bis 7, dadurch gekennzeichnet, daß die hydrophilen Innenflächen des Bodens (7; 107) mit Siliziummonoxid bedampft sind.

8. Reaktionsgefäß nach Anspruch 6 oder 7, dadurch gekennzeichnet, daß die Beschichtung (17; 117) einige Angström dick ist.

9. Reaktionsgefäß nach einem der Ansprüche 1 bis 8, dadurch gekennzeichnet, daß die hydrophoben Innenflächen der Seitenwände (13; 113) und ggf. der Oberseiteninnenfläche der Kammer (5; 105) mit einem unpolaren Material beschichtet sind.

10. Reaktiongefäß nach einem der Ansprüche 1 bis 9, dadurch gekennzeichnet, daß die hydrophoben Innenflächen der Seitenwände (13; 113) und ggf. der Oberseiteninnenfläche der Kammer (5; 105) mit einem Polyolefin, insbesondere Polyisobutylen beschichtet sind.

Fig. 1

Fig. 2

Fig. 3

Fig. 4